Europäisches Patentamt

European Patent Office

Office européen des brevets

(11) Numéro de publication: **0 082 073**
**B1**

(12) **FASCICULE DE BREVET EUROPEEN**

(45) Date de publication du fascicule du brevet: **20.05.87**

(21) Numéro de dépôt: **82402250.3**

(22) Date de dépôt: **09.12.82**

(51) Int. Cl.⁴: **F 27 D 1/16, B 22 D 41/00**

(54) **Procédé et dispositif de frittage de parois réfractaires.**

(30) Priorité: **15.12.81 FR 8123364**

(43) Date de publication de la demande:
**22.06.83 Bulletin 83/25**

(45) Mention de la délivrance du brevet:
**20.05.87 Bulletin 87/21**

(84) Etats contractants désignés:
**AT BE CH DE FR GB IT LI LU NL SE**

(56) Documents cités:
**DE-B-1 086 257**
**FR-A-1 508 512**
**FR-A-2 317 593**
**FR-A-2 319 712**
**FR-A-2 377 595**
**GB-A-2 005 393**

(73) Titulaire: **L'AIR LIQUIDE, SOCIETE ANONYME POUR L'ETUDE ET L'EXPLOITATION DES PROCEDES GEORGES CLAUDE**
**75, Quai d'Orsay**
**F-75321 Paris Cedex 07 (FR)**

(72) Inventeur: **Genies, Bernard**
**99, rue de Paris**
**F-91400 Orsay (FR)**

(74) Mandataire: **Leclercq, Maurice et al**
**L'AIR LIQUIDE SOCIETE ANONYME POUR L'ETUDE ET L'EXPLOITATION DES PROCEDES GEORGES CLAUDE 75, Quai d'Orsay**
**F-75321 Paris Cedex 07 (FR)**

Courier Press, Leamington Spa; England.

## Description

La présente invention concerne un procédé de fabrication in situ de parois réfractaires dans lequel on réalise lesdites parois à l'intérieur d'une enceinte à ouvertures de passage de gaz, on chauffe l'intérieur de ladite enceinte à l'aide d'une flamme en créant une circulation de gaz de combustion dans ladite enceinte, ladite flamme passant par au moins une desdites ouvertures, les autres ouvertures servant à l'échappement des gaz chauds. Elle a pour objet un procédé et un dispositif pour réaliser le frittage de parois réfractaires et elle s'applique plus particulièrement au frittage des parois des récipients utilisés en métallurgie pour contenir, chauffer ou traiter des métaux à l'état liquide.

De tels récipients sont constitués à partir de mélanges de composés réfractaires, sous forme de pisés compactés par damage entre l'enveloppe extérieure du récipient et un gabarit métallique contenant le matériau du côté interne de la paroi, ou des briques crues empilées ou encore de revêtement réfractaire appliqué par projection sur un support rigide. Ces matériaux réfractaires sont soumis à un traitement de frittage qui est indispensable pour assurer à la paroi réfractaire une certaine solidité mécanique avant sa première utilisation. Mais ce traitement n'a pas que des avantages, et les conditions de frittage ont une incidence importante sur les propriétés des parois obtenues, en particulier sur la durée de vie des parois des récipients métallurgiques.

D'une manière générale, les matériaux réfractaires que l'on utilise dans ce genre d'applications, le plus souvent des oxydes métalliques tels que silice, alumine, magnésie, zircone, demandent des températures de frittage de l'ordre de 1500 à 1700°C que l'on sait réaliser dans des fours électriques d'une manière homogène. Mais le chauffage en four électrique ne convient pas à ce type d'applications.

Dans les cas de récipients tels que les poches et fours métallurgiques, dont la destination est de contenir du métal liquide, on s'est orienté vers un frittage in situ.

Dans le cas des fours à induction, ce frittage est obtenu par chauffage au moyen d'un brûleur air-gaz aménagé dans le récipient au voisinage de la face interne des parois, avant d'introduire le métal permettant le chauffage par induction, qui peut être initialement froid et solide ou déjà liquéefié.

Dans la cas des poches, ce frittage est obtenu par chauffage au moyen d'un brûleur air-gaz aménagé dans le récipient au voisinage de la face interne des parois. Mais les brûleurs utilisés ne permettent pas de dépasser des températures de l'ordre de 1200°C, et dans tous les cas, c'est donc du métal à l'état liquide, vers 1500°C, qui est en contact avec les parois réfractaires lorsque pourrait commencer le frittage; ce métal liquide provient également de la fusion du gabarit non récupérable, fusion qui intervient avant le début du frittage proprement dit. De ce fait, on ne peut éviter qu'il se produise des infiltrations de métal liquide à travers les matériaux réfractaires pulvérulents, non encore frittés.

Ces infiltrations présentent bien des inconvénients: pertes inutiles de métal, pertes d'énergie, progression irrégulière et incertaine du "frittage" dans l'épasseur des parois, faiblesses mécaniques et ponts thermiques à travers le réfractaire, usure prématurée du réfractaire, corrosion importante et même, risques de voir des fuites de métal atteindre l'inducteur et les conduites d'eau de refroidissement entourant les récipients, risques de percées, si l'on ne maintient pas une grade de zone pulvérulente d'épaisseur suffisante autour de la zone frittée. Comme le front de frittage limite entre ces deux zones progresse à chaque utilisation du récipient lors d'un chauffage par induction du métal liquide qu'il reçoit, les infiltrations représentent un facteur primordial dans la limitation de la durée de vie des parois. Cette méthode présente également l'inconvénient de ne jamais pouvoir récupérer le gabarit.

Il est connu de FR—A—2.377.595 un dispositif de chauffage d'une enceinte garnie de parois réfractaires, dans le but de sécher celles-ci. Ce séchage, réalisé à l'aide d'une flamme aéro-combustible est effectué généralement à une température de 1100°C. L'enceinte est destinée ensuite à contenir des matières dont la température peut atteindre 1800°C. Afin de refroidir le couvercle dans lequel est fixé le brûleur, une circulation d'air est prévue exclusivement à l'intérieur de celui-ci. Ainsi ce brevet ne donne aucune indication concernant le frittage partiel des parois réfractaires de l'enceinte.

La présente invention permet d'éviter les inconvénients qui viennent d'être rappelés par le fait que contrairement aux techniques connues, elle permet de réaliser le frittage des parois des récipients, in situ, sur leur face interne, avant tout contact avec un métal liquide, dans des conditions de température et d'homogénéite qui empêchent ensuite les infiltrations et limitent la corrosion.

Le procédé selon l'invention est caractérisé en ce que l'on injecte un gaz de dilution au voisinage de ladite flamme au moins pendant la phase initiale du chauffage, tandis que la phase terminale dudit chauffage s'effectue avec une flamme d'un combustible et d'oxygène pur, de façon à provoquer une montée en température dans l'enceinte permettant d'atteindre une température de frittage desdites parois réfractaires, comprise entre 1500°C et 2000°C, ladite température étant maintenue pendant un intervalle de temps suffisant pour assurer le frittage partiel desdites parois réfractaires à partir de la face interne desdites parois.

Suivant d'autres caractéristiques du procédé, le gaz de dilute est notamment de l'air: il est avantageusement injecté coaxialement autour de la flamme, et l'on peut contrôler la montée en température en réglant la puissance de la flamme par les débits respectifs d'oxygène et de gaz combustible et, d'autre part, le débit de gaz de dilution injecté, de manière à élever de façon progressive la température de la paroi de façon homogène depuis la température ambiante ou une valeur d'au plus 500 à 1000°C, tandis que la flamme de combustible et d'oxygène pur est utiliseé de ladite température jusqu'à une

2

température de frittage comprise entre 1500 et 2000°C, et de préférence de l'ordre de 1600 à 1700°C, et on maintient cette température pendant un laps de temps.

On peut également injectee le gaz de dilution dans une première partie du chamffage jusqu'à une température d'environ 1100°C.

Dans la mise en oeuvre de l'invention, l'injection d'un gaz de dilution n'apporte pas seulement une facilité de contrôle de la température par réglage du débit injecté. Elle a en outre pour effet, en diffusant la chaleur de la flamme et en augmentant le volume des fumées, d'assurer une grande homogénéité du chauffage sur toute la surface de la paroi traitée. On peut aussi avantageusement et dans un but de sécurité, utiliser les fluides gazeux (par exemple l'air et l'oxygène) comme refroidisseurs du brûleur en remplacement de l'eau.

L'invention sera maintenant plus complètement décrite en se référant à un mode de mise en oeuvre à titre d'exemple, en référence aux dessins annexés dans lesquels:

la figure 1 est une vue schématique en coupe verticale d'un dispositif selon l'invention;

les figures 2a et 2b représentent des vues en coupe d'une variante de réalisation d'un brûleur.

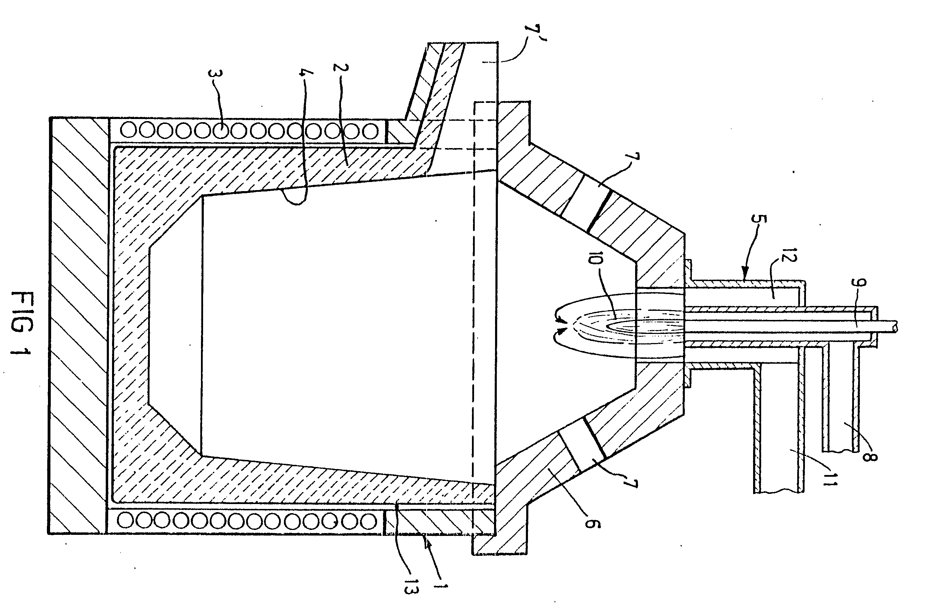

Selon la figure 1 un four à induction à creuset 1 de forme générale cylindrique, est destiné à contenir un métal à l'état liquide, chauffé par un inducteur 3 entourant le four et refroidi par circulation d'eau.

Une paroi 2 est constituée d'un pisé réfractaire partiellement fritté à partir de sa face interne. On sait que la front de frittage progresse de la face interne vers l'extérieur du four à chaque utilisation du four et que la durée de vie de la paroi est directement liée à cette progression. Il est en effet essentiel qu'il subsiste une zone pulvérulente, non frittée, du côté extérieur de la paroi, pour assurer l'isolation thermique et constituer une garde aux infiltrations éventuelles de métal liquide. L'invention permet de réaliser un premier frittage des parois sur une épaisseur variable, sur toute la surface de leur face interne 4, avant la première mise en contact avec du métal liquide.

Ce frittage est réalisé au moyen d'un dispositif comprenant essentiellement un brûleur 5 monté sur un couvercle-support amovible en forme de chapeau 6 adaptable sur le four 1. Ce couvercle-support dégage des orifices 7 d'extraction des fumées vers l'extérieur et un bec de coulée 7'.

Le brûleur 5 est du type oxygène-gaz. L'oxygène comburant est admis par une conduite 8 et le gaz combustible par une conduite 9 de façon à former une flamme 10 qui se situe à l'intérieur de l'enceinte formée par le four et son chapeau. Il est prévu, en outre, autour de la flamme une injection annulaire d'air de dilution introduit par une conduite 11 débouchant dans un espace annulaire 12 co-axial extérieurement aux conduites 8 et 9.

La paroi 2 du four est formée initialement par damage à sec d'un pisé réfractaire à base de silice entre une enveloppe extérieure 13 de four et un gabarit métallique provisoire et récupérable contenant le matériau du côté interné de la paroi. On peut utiliser des pisés classiques du commerce, qui contiennent en général 1,2% d'acide borique, mais on préfère choisir des pisés à faible teneur en éléments minéralisateurs, soit par exemple un pisé siliceux contenant de 0,3 à 0,9 % d'acide borique ou son équivalent en bore d'anhydride borique, voire un pisé sans élément minéralisateur.

Le gabarit métallique (non représente sur la figure) est en général retiré après qu'un chauffage préliminaire ait assuré la cohésion du pisé par un liant organique ou par l'agent minéralisateur qu'il peut contenir. Ce chauffage préliminaire peut lui-même être réalisé au moyen du même équipement que le frittage. On peut également retirer le gabarit préalablement à tout chauffage.

La combinaison du brûleur oxygène-gaz et de l'injection coaxiale annulaire d'air permet de régler la température de la paroi réfractaire du côté de sa face interne, pour assurer un chauffage progressif selon une évolution contrôlée avec précision depuis pratiquement la température ambiante jusqu'à la température de frittage, même lorsque celle-ci doit être élevée, par exemple 1900°C pour certains produits.

On fait monter la température au rythme de 100°C à 200°C par heure, on enlève le gabarit à 400°C et l'on monte à la température de frittage au rythme de 100°C à 200°C par heure et, à la température de frittage, on respecte un palier d'une heure à 1550°C—1650°C ou plus, avant de laisser la paroi se refroidir. On peut d'ailleurs aussi contrôler la descente de température et maintenir le brûleur en fonctionnement pour maintenir le four à température chaude jusqu'à l'introduction du métal. De préférence on maintient un palier de température de une ou deux heures à une température de l'ordre de 500°C.

Ainsi, à titre d'exemple, pour un pisé siliceux, on a monté à une température de frittage de 1550°C en 17 h 30 mn au rythme de 100°C/heure, avec un palier de 2 h à 500°C, et un palier de 2 h à 1550°C. Pour un pisé siliceux, on a monté à la température de frittage de 1550°C et 11 h 30 mn au rythme de 150°C/heure, avec un palier d'une heure à 500°C et un palier d'une heure à 1550°C. Pour un pisé alumineux, on a monté en température de 500°C au rythme de 150°C/heure puis après un palier de 1 h à 500°C on a monté en température à un rythme compris entre 200°C/heure et 250°C/heure et dans tous les cas on a respecté un palier de 1 h à 1650°C.

Pendant toute la durée de chauffage, la puissance de la flamme est réglée par les débits de gaz combustible et d'oxygène admis au brûleur. De plus, on règle les débits relatifs pour que la combustion soit toujours oxydante, afin d'éviter une réduction du réfractaire. Aussi longtemps que de l'air est injecté simultanément autour du brûleur, la flamme 10 chauffe cet air, et l'on réalise ainsi un générateur d'air chaud à l'intérieur du four, dans l'enceinte partiellement fermée, avec une température d'air réglable et homogène.

On assure l'homogénéité du chauffage des parois à fritter par cette injection d'air pendant une

3

première étape de la montée en température, par exemple jusqu'à 1100°C. A partir de cette température, on arrête l'injection d'air tout en poursuivant le réglage de la puissance de la flamme pour suivre le programme de montée en température. Pendant cette seconde étape du chauffage, l'homogénéité de la température en surface de la paroi à fritter est assurée par le rayonnement du réfractaire. La température de la paroi peut être mesurée par un couple thermoélectrique chromel-alumel placé contre la paroi jusqu'à 1100°C, et par un pyromètre optique au-delà.

Le procédé appliqué permet d'assurer le frittage de la paroi sur sa face interne, d'assurer ainsi la solidité mécanique et la fermeture des porosités, avant tout contact avec du métal liquide. La suppression des risques d'infiltration augmente considérablement la durée de vie des parois. On a constaté par exemple, dans le cas de fours à induction, des réductions énergétiques de 20 à 30%. La précision du réglage de la température de l'homogénéité permettent d'assurer mieux que les techniques antérieures une grande résistance mécanique et une bonne résistance en surface aux chocs thermiques et à la corrosion. L'analyse du réfractaire fritté montre l'absence de phase vitreuse et une transformation complète du quartz en cristobalite. La qualité de la paroi frittée en surface est également démontrée par des mesures de porosité qui ont donné les résultats ci-après:

| Distance de la face interne | : 0 à 1 cm, | 1 à 2 cm, | 3,5 à 4,5 cm |
|---|---|---|---|
| Porosité totale | : 12,9 % | 20,1 % | 20,8 % |
| dont : | | | |
| rayon >7,5 microns | : 45 % | 84 % | 63 % |
| rayon <7,5 microns | : 55 % | 16 % | 37 % |

On remarque la faible porosité totale sur l'ensemble de la couche frittée, et surtout la faible part prise par les macroporosités à l'endroit du front de frittage.

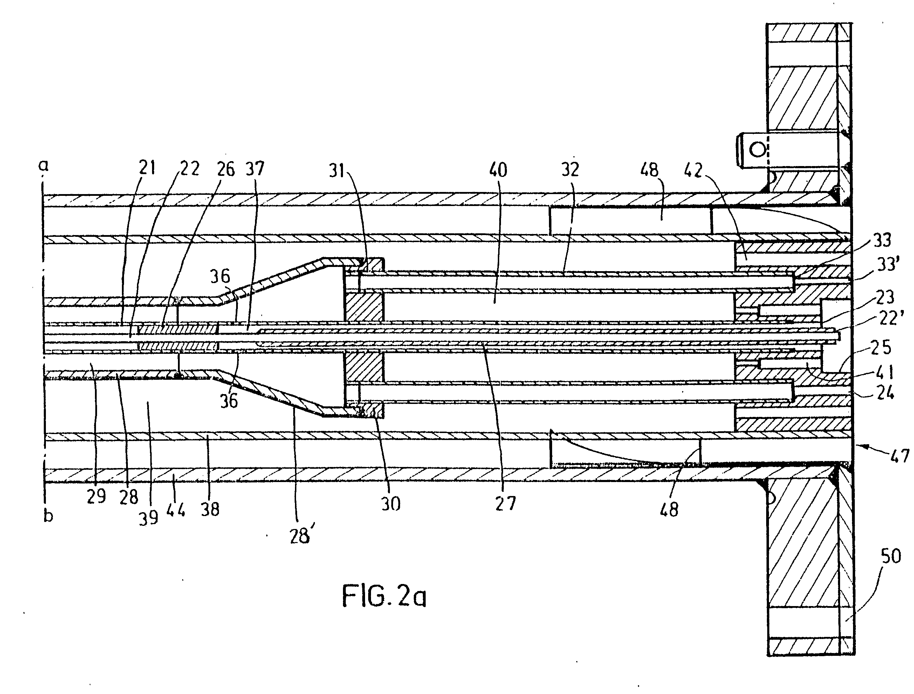

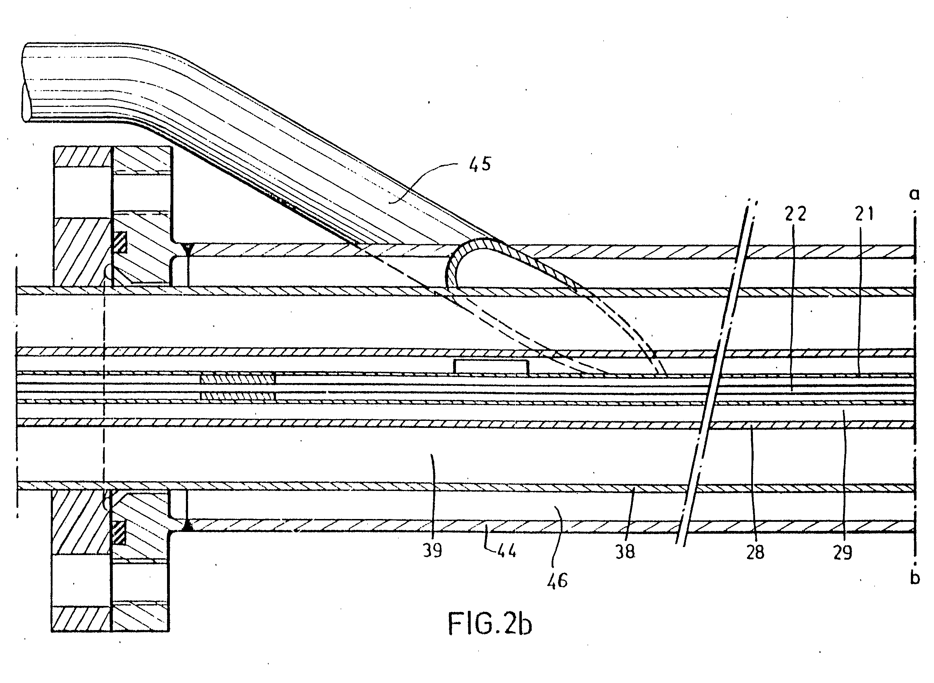

En se référant à l'ensemble des figures 2a et 2b un brûleur de frittage comporte:

un tube central 21 dans lequel est montée une électrode d'allumage 22, le tube 21 étant raccordé à un passage axial 23 d'une pièce massive formant nez de brûleur 24, le passage 23 débouchant lui-même dans un évidement central 25 du nez de brûleur 24. L'électrode d'allumage 22 est montée dans le tube 21 par l'intermédiaire de bagues supports 26 et sa partie terminale est enrobée par un tube d'alumine 27. Son extrémité libre 22' fait saillie dans l'évidement central 25.

un second tube 28 coaxial au tube central 21 formant avec celui-ci un conduit annulaire principal 29 pour un gaz combustible, ce tube 28 s'évasant à son extrémité avant 28' pour se raccorder à une plaque transversale 30 ayant une pluralité annulaire de perforations 31 servant de support à une couronne de tubes répartiteurs 32 qui, à leurs autres extémités, s'engagent dans des perforations 33 du nez de brûleur 24; ces perforations 33 débouchent à l'extérieur par des alésages calibrés 33'. Sur le tube 28 est branché, à une extrémité opposée au nez 24, un tube d'alimentation en gaz combustible, non représenté; dans le conduit central 21 sont ménagées quelques perforations 36 faisant communiquer le conduit annulaire 29 et le conduit axial 37 formé par le tube 21 pour le transfert du gaz combustible pilote ou d'allumage.

un troisième tube 38 est agencé coaxialement à l'extérieur du second tube 28 et vient s'emboîter à la périphérie extérieure du nez de brûleur 24. Sur ce tube 38 est branché, à une extrémité éloignée du nez de brûleur 24, un tube d'amenée d'oxygène non représenté, formant ainsi avec la seconde tube 28 un conduit annulaire d'oxygène 39 qui débouche dans une chambre de répartition 40 délimitée entre la plaque transversale 30 et le nez 24 et au travers de laquelle s'étendent la partie terminale du conduit axial 21 et la couronne annulaire de tubes 32. Cette chambre de répartition 40 débouche à l'extérieur en une première couronne de passages transversaux étroits 41 agencés autour et à proximité du passage axial 23, de façon à déboucher eux-même dans l'évidement 25 et en une seconde couronne de passages transversaux larges 42 s'étendant extérieurement autour et à faible distance de la couronne de passages 33—33'.

un quatrième tube 44 est agencé coaxialement autour et à distance du troisième tube 38, est raccordé d'un côté à deux tubes d'amenée d'air 45 (dont un seul est visible au dessin) dont les extémités de raccordement au tube 44 sont inclinées à orientation substantiellement tangente pour conférer à l'air, dès son admission dans un conduit annulaire 46 formé entre les tubes 38 et 44, un mouvement tourbillonnaire. Le tube 44 est fixé autour de l'extrémité du conduit 24 par une couronne 47 d'ailettes 48 qui accentue l'effet de tourbillon précédemment initié par l'orientation des tubes 45.

L'ensemble ainsi décrit est monté dans une bride 50 qui est fixé sur la paroi de support de brûleur. En fonctionnement, une flamme d'allumage est créée en permanence dans l'évidement 25 par combustion du gaz admis dans le conduit 37 du tube 21 par les perforations 36 et en provenance du conduit principal de gaz combustible 39, cette flamme d'allumage étant elle-même constamment soumise aux décharges électriques de l'électrode d'allumage 22; la flamme principale de brûleur s'établit autour de la flamme d'allumage par combustion du gaz véhiculé par les tubes 32 et les perforations 33—33' dans l'oxygène véhiculé par les passages transversaux larges 42. Lorsque l'air est mis en oeuvre dans le conduit 46, il débouche autour de la flamme principale en un mouvement tourbillonnaire comme indiqué précédemment, ce qui a pour effet de ralentir la vitesse axiale de la flamme principale et outre l'effet de

4

dilution souhaitée, de donner à la flamme une forme plus ramassée convenant mieux à l'operation de frittage.

Naturellement, l'invention n'est pas limitée à l'exemple de mise en oeuvre qui à été décrit en détails ci-dessus. Le procédé de l'invention peut être appliqué d'une manière analogue au frittage in situ d'autres récipients réfractaires, au frittage de pisés projetés pour la réparation de poches métallurgiques ou autres récipients par projection mais aussi pour le frittage de briques crues ou de blocs monolithiques pour remplacer des réfractaires défectueux, etc...

## Revendications

1. Procédé de fabrication in situ de parois réfractaires, dans lequel on réalise lesdites parois à l'intérieur d'une enceinte à ouverture de passage de gaz, on chauffe l'intérieur de ladite enceinte à l'aide d'une flamme en créant une circulation de gaz de combustion dans ladite enceinte, ladite flamme passage par au moins une desdites ouvertures, les autres ouvertures servant à l'échappement des gaz chauds, caractérisé en ce que l'on injecte un gaz de dilution au voisinage de ladite flamme au moins pendant la phase initiale du chauffage, tandis que la phase terminale dudit chauffage s'effectue avec une flamme d'un combustible et d'oxygène pur, de façon à provoquer une montée en température dans l'enceinte permettant d'atteindre une température de frittage desdites parois réfractaires, comprise entre 1500 et 2000°C, ladite température étant maintenue pendant un intervalle de temps suffisant pour assurer le frittage partiel desdites parois réfractaires à partir de la face interne desdites parois.

2. Procédé selon la revendications 1, caractérisé en ce que l'on injecte le gaz de dilution coaxialement autour de la flamme de combustible et d'oxygène pur.

3. Procédé selon l'une des revendications 1 ou 2, caractérisé en ce que l'on règle la puissance de la flamme et le débit du gaz de dilution injecté de manière à élever progressivement la température de la paroi réfractaire, depuis une température comprise entre la température ambiante et une valeur d'au plus 500°C à 1000°C tandis que la flamme de combustible et d'oxygène pur est utilisée de ladite température jusqu'à une température de frittage comprise entre 1500°C et 2000°C, et de préférence de 1600°C à 1700°C, et on assure un palier à cette température de frittage.

4. Procédé selon l'une des revendications 1 ou 2, caractérisé en ce que l'on injecte le gaz de dilution, dans une première partie du chauffage, jusqu'à une température d'environ 1100°C.

5. Procédé selon l'une des revendications 1 à 4, caractérisé en ce que le gaz de dilution est de l'air.

6. Procédé selon l'une des revendications 1 à 5, caractérisé en ce que le matériau constituant la paroi est un pisé réfractaire à faible teneur en éléments minéralisateurs.

7. Procédé selon l'une des revendications 1 à 6, selon lequel la paroi est conformée entre l'enceinte et un gabarit métallique, caractérisé en ce que l'on dégage ledit gabarit au plus tard lorsque la température à atteint environ 400°C.

8. Procédé selon l'une des revendications 1 à 6, selon lequel la paroi est conformée entre l'enceinte et un gabarit métallique, caractérisé en ce que l'on dégage ledit gabarit avant toute montée en température.

9. Application du procédé selon l'une des revendications 1 à 8 au frittage des parois réfractaires de récipients métallurgiques in situ avant tout contact avec un métal liquide.

## Patentansprüche

1. Verfahren zur Herstellung von feuerfesten Wänden in situ, bei welchem man die Wände im Inneren eines Behälters mit Durchgangsöffnungen für Gas herstellt, das Innere dieses Behälters mit Hilfe einer Flamme heizt, wobei man eine Zirkulation von Verbrennungsgas in diesem Behälter erzeugt, die Flamme durch mindestens eine der Öffnungen hindurchgeht und die anderen Öffnungen dem Entweichen der heißen Gase dienen, dadurch gekennzeichnet, daß man ein Verdünnungsgas in der nachbarschaft dieser Flamme mindestens während der anfänglichen Erwärmungsphase einspritzt, während die Endphase der Erwärmung sich mit einer Flamme eines Brennstoffes und reinen Sauerstoffes derart vollzieht, daß in dem Behälter ein Temperaturanstieg hervorgerufen wird, der das Erreichen einer Sintertemperatur dieser feuerfesten Wände zwischen 1.500°C und 2.000°C erlaubt, wobei diese Temperatur während eines Zeitintervalles aufrechterhalten wird, welches ausreicht, um die Teilsinterung der feuerfesten Wände, ausgehend von der inneren Oberfläche dieser Wände, sicherzustellen.

2. Verfahren nach Anspruch 1, dadurch gekennzeichnet, daß man koaxial um die Flamme des Brennstoffes und reinen Sauerstoffes herum Verdünnungsgas einspritzt.

3. Verfahren nach einem der Ansprüche 1 oder 2, dadurch gekennzeichnet, daß man die Leistung der Flamme und den Durchsatz des eingespritzten Verdünnungsgases derart reguliert, daß man allmählich die Temperatur der feuerfesten Wand von einer Temperatur zwischen der Umgebungstemperatur und einem Wert von höchstens 500°C bis 1.000°C, während die Flamme mit Brennstoff und reinem Sauerstoff bei dieser Temperatur verwendet wird, bis auf eine Sintertemperatur zwischen 1.500°C und 2.000°C, und vorzugsweise von 1.600°C bis 1.700°C, erhöht und man ein Niveau bei dieser Sintertemperatur sicherstellt.

4. Verfahren nach einem der Ansprüche 1 oder 2, dadurch gekennzeichnet, daß man das Verdünnungsgas in einem ersten Heizabschnitt bis zu einer Temperatur von etwa 1.100°C einspritzt.

5. Verfahren nach einem der Ansprüche 1 bis 4, dadurch gekennzeichnet, daß das Verdünnungsgas Luft ist.

6. Verfahren nach einem der Ansprüche 1 bis 5, dadurch gekennzeichnet, daß das die Wand bildende Material ein feuerfestes Stampfbauteil mit geringem Gehalt an mineralbildenden Elementen ist.

7. Verfahren nach einem der Ansprüche 1 bis 6, gemäß welchem die Wand zwischen dem Behälter und einem metallischen Formstück gebildet ist, dadurch gekennzeichnet, daß man das Formstück spätestens abtrennt, wenn die Temperatur ungefähr 400°C erreicht hat.

8. Verfahren nach einem der Ansprüche 1 bis 6, gemäß welchem die Wand zwischen dem Behälter und einem metallischen Formstück gebildet ist, dadurch gekennzeichet, daß man das Formstück vor jeglichem Temperaturanstieg abtrennt.

9. Anwendung des Verfahrens nach einem der Ansprüche 1 bis 8 auf das Sintern von feuerfesten Wänden metallargischer Behälter in situ vor jeglichem Kontakt mit einem flüssigen Metall.

## Claims

1. Method of fabrication in situ of refractory walls, whereby one realizes the said walls in the interior of a container with openings for gas passage, one heats the interior of the said container by means of a flame, creating a circulation of combustion gas in the said container, the said flame passing through at least one of the said openings, the other openings serving for the escaping of hot gases, characterized in that one injects a dilution gas in the neighbourhood of the said flame at least during the initial phase of heating, while the end phase of the said heating is effected with a flame of combustibles and pure oxygen in a manner to provoke an increase in temperature in the container, permitting to reach a sintering temperature of the said refractory walls between 1500 and 2000°C, the said temperature being maintained during a time interval sufficient to ensure the partial sintering of the said refractory walls starting from the internal face of the said walls.

2. Method according to claim 1, characterized in that one injects the dilution gas coaxially around the flame of combustibles and pure oxygen.

3. Method according to any one of the claims 1 or 2, characterized in that one regulates the power of the flame and the output of the injected dilution gas in such a manner as to progressively increase the temperature of the refractory wall from a temperature between the ambient temperature and a value 500°C to 1000°C at maximum, while the flame of combustibles and pure oxygen is utilized from this temperature to a sintering temperature between 1500°C and 2000°C and preferably from 1600°C to 1700°C, and one ensures a platform at this sintering temperature.

4. Method according to one of the claims 1 or 2, characterized in that one injects the dilution gas in a first heating part up to a temperature of about 1100°C.

5. Method according to one of the claims 1 to 4, characterized in that the dilution gas is air.

6. Method according to one of the claims 1 to 5, characterized in that the material forming the wall is a refractory pisé with a small content of mineralizing elements.

7. Method according to one of the claims 1 to 6, according to which the wall is formed between the container and a metallic mold, characterized in that one disengages the said mold latest when the temperature has reached about 400°C.

8. Method according to one of the claims 1 to 6, according to which the wall is formed between the container and a metallic mold, characterized in that one disengages the said mold before all increase in temperature.

9. Application of the method according to one of the claims 1 to 8 to the sintering of refractory walls of metallurgical containers in situ before all contact with a liquid metal.

FIG 1

FIG.2a

FIG.2b